# EUROPEAN PATENT SPECIFICATION

(11) **EP 0 414 531 B1**
(45) Date of publication and mention of the grant of the patent: **04.05.1994**
(21) Application number: 90309224.5
(22) Date of filing: 22.08.1990
(51) Int. Cl.: B64C 9/02, B64C 9/14

(54) **Self locking end stops for aircraft control surfaces**
Selbstfeststellbarer Endanschlag einer Flugzeugessteuerfläche
Embout d'arrêt autobloquant pour surfaces de commande d'avion

(30) Priority: 23.08.1989 GB 8919139
(43) Date of publication of application: 27.02.1991
(73) Proprietor: BRITISH AEROSPACE PUBLIC LIMITED COMPANY, Farnborough, Hants. GU14 6YU (GB)
(72) Inventor: Britton, John, Filton, Bristol BS12 7QW (GB)

(56) References cited:
- EP-A- 0 291 328
- GB-A- 299 274

## Description

This invention relates to self-locking end stops for use with aircraft control surface installations such as leading edge slats and trailing edge flaps which are supported upon arcuate tracks slidably mounted upon the aircraft wing by which means the control surface is moved from a stowed to a deployed location and vice versa.

It is important to ensure that when the control surface is deployed it cannot inadvertently overtravel and become detached from the wing. To prevent such an unlikely occurrence an end stop is positioned adjacent the end of each track for engaging a stop plate on the wing at the extreme range of control surface movement. One such device is disclosed in document EP-A-O 291 328, British Aerospace in which such an end stop is used, but is not releasable for removing the control surface. However, it is also necessary to remove the control surface installation from the aircraft for routine servicing or replacement and so the end stops must be readily removable yet of such construction that they are compact, of minimum component parts but positively locked when assembled into place to ensure against control surface jamming.

According to the present invention there is provided a self-locking end stop arrangement for restricting the linear displacement of an aircraft flight control surface said flight control surface being mounted upon two or more longitudinal support tracks slidably engaging the aircraft wing by which means the control surface is deployed forwardly or rearwardly with respect to said wing and said end stop arrangement comprising means which when installed protrude from said support tracks such that the protrusions align with and contact means mounted upon the wing structure when the control surface is moved to an extreme forward or rearward position, thus preventing inadvertent detachment of the control surface from the aircraft, wherein the self-locking end stop arrangement is readily releasable for removal of the flight control surface from the aircraft wing and the protruding means and co-operating contact means thereof respectively comprise first and second interlockable studs protruding laterally from opposite sides of the support tracks on the one hand and stop plates on the other hand.

One embodiment of the invention will now be described, by way of example only, and with reference to the following drawings in which:-

Figure 1 illustrates, in side elevation an aircraft leading edge slat installation.

Figure 2 is a part section through the installation taken along the line '2-2' in Figure 1.

Figure 3 is a part sectioned elevation through a first component part of the end stop.

Figure 4 is a localised enlargement of one portion of the component of Figure 3.

Figure 5 is a longitudinal section through a second component part of the end stop.

Figure 6 is a localised enlargement of one portion of the component of Figure 5.

Figure 7 is an end view on the first and second component parts in direction of arrow 7 in Figures 3 and 5.

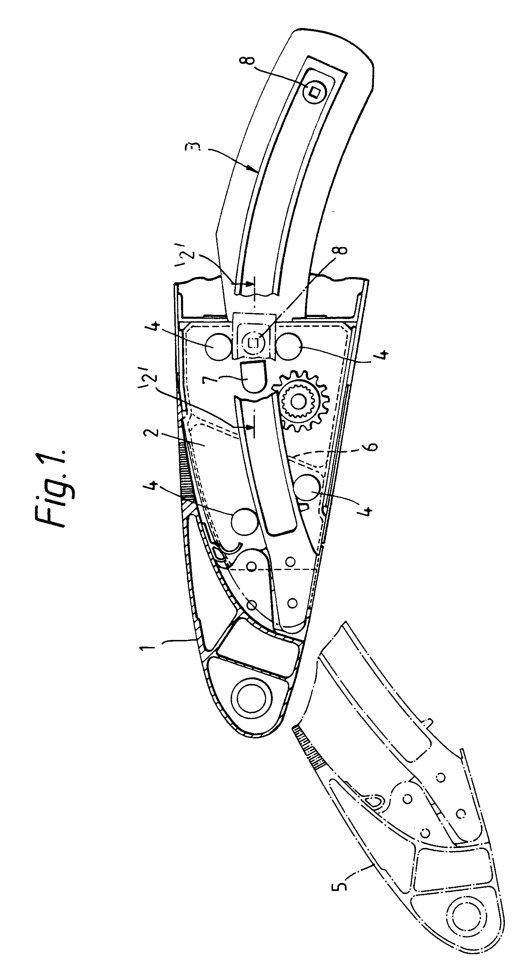

Referring to the drawings, Figure 1 illustrates a cross-sectional side elevation on a typical leading edge slat installation in which a slat 1 is supported upon a wing fixed leading edge portion 2 by means of arcuate support beams 3, generally two in number for each spanwise portion of slat. The support beam is mounted in rolling engagement with the wing leading edge by means of spaced apart rollers 4 which are generally straddle mounted between spaced apart pairs of leading edge ribs 6. By this arrangement the slat may be deployed from its stowed cruise configuration where it conforms to wing aerodynamic profile to a fully extended 'high lift' configuration 5.

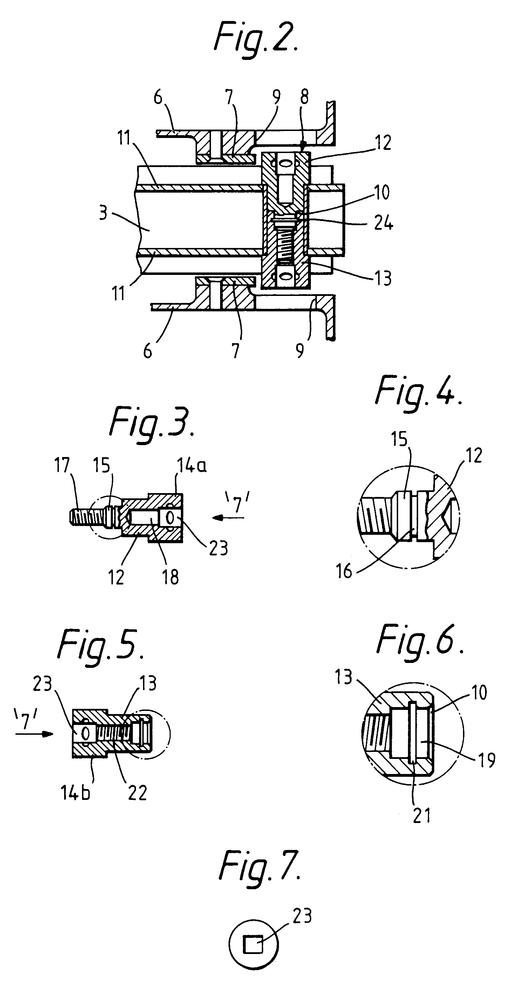

For clarity in Figure 1 the nearest leading edge rib 6 is removed to disclose the arcuate track arrangement in more detail. Similarly the arcuate track 3 is locally cut away to show a stop plate 7 which is attached to the inner face of the rib 6 and, as will be seen in Figure 2, is typical for both ribs. Adjacent the end of the arcuate track is the self-locking end stop 8 in accordance with the invention and this is shown on the track in its stowed position and in the deployed sense lying adjacent the stop plate 7.

In Figure 2 the disposition of the ribs 6 with respect to the arcuate track 3 is shown. Although not illustrated here the arcuate track is of inverted U-shaped or top hat section with upper and lower outwardly facing side flanges providing roller bearing surfaces. The end stop assembly 8 lying transversely of the beam projects beyond each edge boundary of the track 3 to form the stop surface for contacting stop plates 7 as necessary. It is with the slat in this deployed location that the end-stop is either assembled or removed, access holes 9 being provided in each leading edge rib 6 for insertion or removal of the component parts and for socket spanner access.

The end stop assembly effectively comprises two component parts, interlocking shouldered studs 12 and 13. Stud 12, as illustrated in Figures 3 and 4, comprises a shouldered stud portion 14a, a plain shank portion 15 incorporating a circlip retaining groove 16 located part way along its length and a threaded shank portion incorporating a lockthread 17, for example a 'SPIRALOCK' thread form, (SPIRALOCK is the Registered Trade Mark of the 'KAYNAR' company). The stud portion 14a includes a counterbore 18 over a greater portion of its length and further includes a female square drive socket 23 of well known form (as for example in accordance with BS 4006). Stud 13 as illustrated in Figures 5 and 6 comprises a shoulder stud portion, incorporating along its length a counterbore 19 including a circlip engaging groove 21 dimensionally compatible with the mating portion 15 of the stud 12. The stud 13 further includes a threaded bore portion 22 incorporating a lock thread (for example a SPIRALOCK thread form as previously referred to) compatible with the co-operating stud 12 and the stud head similarly includes a female square drive socket, 23 also preferable in accordance with BS 4006. A circlip 24 is incorporated into the recess 16 in the stud 12.

On assembly the respective studs 12 and 13 are inserted from each side and rotated by means of socket spanners engaging the head sockets 23 via the rib access holes 9 until the respective lock threads are engaged by means of a lead in 10 and the parts are in locking abutment. Simultaneously the circlip 24 will engage with the co-operating groove 21 in the stud. This circlips effectively constitutes a detent and a secondary locking feature and thus it will be seen that the present arrangement comprises a pair of self-contained, self-locking components without any reliance on separate fastenings, bolted joints etc. On final assembly the studs project from each side of the track to form the stop.

Although the invention is described in the context of a wing leading edge slat installation it is equally application to trailing edge flaps or any similar application involving the use of arcuate tracks where there is a requirement to provide restriction in linear movement.

## Claims

1. A self-locking end stop arrangement (8) for restricting the linear displacement of an aircraft flight control surface (1) said flight control surface (1) being mounted upon two or more longitudinal support tracks (3) slidably engaging the aircraft wing (2) by which means the control surface (1) is deployed forwardly or rearwardly with respect to said wing (2) and said end stop arrangement (8) comprising means (12,13) which, when installed, protrude from said support tracks (3) such that the protrusions (14) align with and contact means (7) mounted upon the wing structure (6) when the control surface is moved to an extreme forward or rearward position, thus preventing inadvertent detachment of the control surface from the aircraft, characterised in that the self-locking end stop arrangement (8) is readily releasable for removal of the flight control (1) suface from the aircraft wing (2) and the protruding means and co-operating contact means thereof respectively comprise first and second interlockable studs (12, 13) protruding laterally from opposite sides of the support tracks (3) on the one hand and stop plates (7) on the other hand.

2. An end stop arrangement according to Claim 1 in which said first stud (12) includes a shouldered stud portion (14a), a plain shank portion (15) incorporating an annular groove (16) for retaining a circlip (24) and a threaded shank portion (20), and a square drive socket (23) in the end of the shouldered stud portion (14a) said second stud (13) including a shouldered stud portion (14b) having at one end a counterbore (19) including a circlip engaging annular groove (21), at the opposite end a square drive socket (23) and an interconnecting threaded bore (22), the threads associated with said first stud (12) and second stud (13) being of the lockthread type, the arrangement being such that said first and second studs (12,13) are inserted into the support track (3) from their respective sides such that they become engaged one with the other and differentially rotated by drive means, engaging said sockets (23) until they are in locking abutment with each other and prevented from loosening rotation by interlocking of the respective thread portions, the circlip (24) engaging the annular groove (21) to form a detent.

## Patentansprüche

1. Selbstsichernde Endanschlaganordnung (8) zur Begrenzung der Linearbewegung einer Flugzeug-Flugsteuerfläche (1), die an zwei oder mehr sich in Längsrichtung erstreckenden Trag-Führungsschienen (3) befestigt ist, die gleitend mit der Flugzeug-Tragfläche (2) in Eingriff stehen und mit deren Hilfe die Steuerfläche (1) in Vorwärts- oder Rückwärtsrichtung gegenüber der Tragfläche (2) ausgefahren wird, wobei die Endanschlaganordnung (8) Einrichtungen (12, 13) umfaßt, die im eingebauten Zustand von den Trag-Führungsschienen (3) derart vorspringen, daß die vorspringenden Teile (149 mit auf der Tragflächenstruktur (6) angeordneten Anschlageinrichtungen (7) ausgerichtet sind und mit diesen in Berührung kommen, wenn die Steuerfläche auf eine vordere oder hintere Endstellung bewegt wird, wodurch eine versehentliche Trennung der Steuerfläche von dem Luftfahrzeug verhindert wird,
dadurch gekennzeichnet, daß die selbstsichernde Endanschlaganordnung (8) zum Abbau der Flugsteuerfläche von der Flugzeug-Tragfläche (2) leicht trennbar ist und daß die vorspringenden Teile und die damit zusammenwirkenden Anschlageinrichtungen jeweils einerseits erste und zweite miteinander verriegelbare Stehbolzen (12, 13), die seitlich von entgegengesetzten Seiten der Trrag-Führungsschienen (3) vorspringen, und andererseits Anschlagplatten (7) umfassen.

2. Endanschlaganordnung nach Anspruch 1, bei der der erste Stehbolzen (12) einen mit einer Schulter versehenen Stehbolzenabschnitt (14a), einen glatten Schaftabschnitt (15) mit einer ringförmigen Nut (16) zum Festhalten eines Sprengringes (24) und einen Gewindeschaftabschnitt (20) sowie eine Innenvierkant-Steckschlüsselbuchse (23) im Ende des mit einer Schulter versehenen Stehbolzenabschnittes (14a) einschließt, während der zweite Stehbolzen (13) einen mit einer Schulter versehenen Stehbolzenabschnitt (14b), der an einem Ende eine Senkbohrung (19) mit einer mit einem Sprengring in Eingriff kommenden ringförmigen Nut (21), am gegenüberliegenden Ende eine Innenvierkant-Steckschlüsselbuchse (23) und eine zwischen diesen liegende Gewindebohrung (22) einschließt, wobei die Gewinde des ersten Stehbolzens (12) und des zweiten Stehbolzens (13) vom selbstsichernden Typ sind und die Anordnung derart ist, daß die ersten und zweiten Stehbolzen (12, 13) in die Trag-Führungsschiene (3) von ihren jeweiligen Seiten aus derart eingesetzt werden, daß sie miteinander in Eingriff kommen, worauf sie durch Werkzeugschlüsseleinrichtungen, die mit den Innenvierkantbuchsen (23) in Eingriff kommen, in entgegengesetzter Richtung gedreht werden, bis sie in Verriegelungsanlage aneinander anliegen und gegen eine Drehung in Lockerungsrichtung dadurch gehindert sind, daß die jeweiligen Gewindeabschnitte sich gegeneinander verriegeln, während der Sprengring (24) mit der ringförmigen Nut (21) in Eingriff kommt, um eine Rastung zu bilden.

## Revendications

1. Agencement (8) formant butée d'extrémité autobloquante destinée à limiter le déplacement linéaire d'une surface (1) de commande de vol d'avion, ladite surface (1) de commande de vol étant montée sur deux ou plus de deux voies (3) de support longitudinales en prise de manière coulissante avec l'aile (2) de l'avion, au moyen desquelles la surface (1) de commande est déployée vers l'avant ou vers l'arrière par rapport à ladite aile (2) et ledit agencement (8) formant butée d'extrémité comportant des moyens (12, 13) qui lorsqu'ils sont installés font saillie à partir desdites voies (3) de support de telle sorte que les saillies (14) soient alignées avec des moyens de contact (7) montés sur la structure (6) de l'aile et viennent en contact avec ces derniers lorsque la surface de commande est déplacée vers une position extrême avant ou arrière, empêchant ainsi la séparation par inadvertance de la surface de commande de l'avion, caractérisé en ce que l'agencement (8) formant butée d'extrémité autobloquante peut être facilement supprimé pour enlever la surface (1) de commande de vol de l'aile (2) de l'avion et les moyens formant saillie et les moyens de contact complémentaires de ceux-ci comportent respectivement d'une part des premier et second ergots (12, 13) mutuellement verrouillables faisant saillie latéralement à partir des côtés opposés des voies (3) de support et d'autre part des plaques (7) d'arrêt.

2. Agencement formant butée d'extrémité selon la revendication 1, dans lequel ledit premier tenon (12) comporte une partie (14a) formant tenon muni d'un épaulement, une partie (15) formant tige pleine comportant une gorge annulaire (16) destinée à retenir un circlip (24) et une partie (20) formant tige filetée, et une douille (23) formant entraînement carré située dans l'extrémité de la partie (14a) formant tenon muni d'un épaulement ledit second tenon (13) comportant une partie (14b) formant tenon muni d'un épaulement ayant au niveau d'une première extrémité un contre-alésage (19) comportant une gorge annulaire (21) de prise de circlip, ayant au niveau de l'extrémité opposée une douille (23) formant entraînement carré et un alésage (22) d'interconnexion fileté, les filets associés audit premier tenon (12) et audit second tenon (13) étant du type filet verrouillant, l'agencement étant tel que ledit premier et ledit second tenons (12, 13) sont insérés dans la voie (3) de support à partir de leurs côtés respectifs de telle sorte qu'ils deviennent en prise l'un avec l'autre et sont mis en rotation de manière différentielle par des moyens d'entraînement, coopérant avec lesdites douilles (23), jusqu'à ce qu'ils soient en butée de verrouillage l'un avec l'autre et empêchés de tourner en se relâchant en verrouillant mutuellement les parties filetées respectives, le circlip (24) étant en prise dans la gorge annulaire (21) pour former un arrêt.
